# EUROPÄISCHE PATENTSCHRIFT

(11) **EP 1 027 947 B1**
(45) Veröffentlichungstag und Bekanntmachung des Hinweises auf die Patenterteilung: **18.08.2004**
(21) Anmeldenummer: 00102604.6
(22) Anmeldetag: 08.02.2000
(51) Int. Cl.: B23B 31/26, B23B 31/30

(54) **Spannantrieb für Zugstange**
Clamp drive for a drawbar
Commande de serrage pour une barre de traction

(30) Priorität: 11.02.1999 DE 19905688
(43) Veröffentlichungstag der Anmeldung: 16.08.2000
(73) Patentinhaber: Kittelberger, Bernhard, 86391 Stadtbergen (DE)
(72) Erfinder: Kittelberger, Bernhard, 86391 Stadtbergen (DE)
(74) Vertreter: Gahlert, Stefan, Dr.-Ing.

(56) Entgegenhaltungen:
- DE-A- 3 813 670
- DE-C- 4 106 504
- DE-U- 8 912 833
- DE-U- 8 912 834

## Beschreibung

Die Erfindung betrifft einen Spannantrieb zum axialen Bewegen und Verspannen einer Zugstange, mit einem Spannzylinder, in dem die Zugstange zwischen einer Lösestellung und einer Spannstellung axial beweglich geführt ist, mit einem durckmittelbetätigten Spannkolben, der mit der Zugstange verbunden und gemeinsam mit dieser im Spannzylinder axial beweglich ist, und mit einer die Zugstange in der Spannstellung formschlüssig sichernden Verriegelungseinrichtung.

Die Erfindung betrifft ferner eine Spindel mit einem Ende, an dem ein Spanner zum Spannen eines Teiles vorgesehen ist, der über eine in der Spindel aufgenommene Zugstange mittels eines Spannantriebes betätigbar ist, wobei der Spannantrieb eine Bewegung der Zugstange zwischen einer Spannstellung, in der der Spanner gespannt ist, und einer Lösestellung, in der der Spanner gelöst ist, und eine Verspannung der Zugstange in der Spannstellung erlaubt.

Ein Spannantrieb gemäß der vorstehend genannten Art ist aus der DE-A-43 09 236 bekannt.

Bei dem bekannten Spannantrieb handelt es sich um einen Drehspannantrieb zum Ver- und Entriegeln von Austauschteilen, wie Werkzeugen und anderen Teilen, mit einer Zugstange, die zum Verriegeln eines Hammerkopfes hinter eine Anlage und zum Entriegeln von der Anlage über ein Stellmittel drehbar ist, wobei die Drehung der Zugstange kurvengeführt ist. Die bekannte Einrichtung weist einen Spannzylinder auf, in dem ein mit der Zugstange verbundener Spannkolben axial verschiebbar geführt ist, der den Hohlraum innerhalb des Spannzylinders in zwei Druckräume aufteilt. Jeder Druckraum ist über einen Druckanschluß druckbeaufschlagbar und druckentlastbar, wobei der Spannkolben gegen Drehung gesichert ist und mit der in den Spannkolben eintauchenden Zugstange eine Zwangsführung bildet aus einer Längsnut in Längserstreckung von Kolben bzw. Zugstange, die in ein eine Drehung der Zugstange bewirkendes, zur Längserstreckung abgewinkeltes Kurventeil übergeht und einen in die Längsnut eingreifenden Führungsbolzen zwischen Spannkolben und Zugstange aufweist. Das Spannmittel für die Spannbewegung ist aus einer Innenkegelfläche aus Spannkolben und mit diesem zusammenwirkenden Keilstücken mit Gegenkeilflächen gebildet, wobei die Keilstücke bei Druckbeaufschlagung des Druckraumes radial bewegt werden und so die Zugstange im Sinne einer Spannbewegung zurückziehen.

Der bekannte Spannantrieb ist relativ kompliziert aufgebaut und muß zur Aufrechterhaltung des Spannzustandes ständig mit Druckmittel beaufschlagt werden. Auch ist die Ausbildung als Drehspannantrieb nachteilig.

Spannantriebe gemäß der eingangs genannten Art werden für Spannaufgaben in unterschiedlichen Bereichen eingesetzt. Ein bevorzugtes Einsatzgebiet sind Bearbeitungsspindeln gemäß der vorstehend genannten Art, an denen ein Adapter, ein Werkzeug oder ein anderes Teil gespannt werden muß. Ein weiteres Einsatzgebiet solcher Spannantriebe betrifft das Spannen von Aggregaten und vorsatzköpfen oder auch das Spannen von kompletten Spindeln, die an Mehrspindelbearbeitungsmaschinen auswechselbar vorgesehen sind.

Allen diesen Einsatzbereichen ist gemeinsam, daß bei geringen äußeren Abmessungen des Spannantriebes eine hohe Spannkraft erzeugt werden muß, die auch bei einem Ausfall der Druckmittelversorgung zuverlässig aufrechterhalten werden muß. Nur dann kann die für jeglichen Einsatz wichtige Forderung erfüllt werden, daß eine selbsttätige Entriegelung unter allen Umständen sicher verhindert wird.

Eine Spindel gemäß der eingangs genannten Art ist aus der DE-A-38 07 140 bekannt.

Bei der bekannten Spindel ist zum Spannen eines Kupplungsteiles, wie eines Adapters für ein Werkzeug, ein Spanner am äußeren Ende vorgesehen, mit dem der Adapter mit hoher Spannkraft am Spindelende eingespannt werden kann. Zur Betätigung des Spanners ist eine Zugstange vorgesehen, die durch ein Federpaket mit einer Spannkraft beaufschlagt ist, um so den Spanner in seiner Spannstellung zu halten. Zum Lösen wird die Zugstange entgegen der Kraft des Federpaketes mechanisch bewegt.

Eine Spindel ähnlicher Bauart ist aus der DE-A-38 13 670 bekannt. Auch hierbei ist zum Spannen eines Adapters am äußeren Ende der Spindel ein Spanner mit einer Spannzange vorgesehen, die über eine Zugstange betätigt wird und die über ein Federpaket kraftbeaufschlagt ist, so daß die Zugstange in ihrer Spannstellung gehalten wird. Zum Lösen des Spanners wird die Zugstange entgegen der Kraft des Federpaketes über ein Verkeilungsgetriebe mechanisch bewegt.

Bei den vorstehend beschriebenen Spindeln hat sich die Verwendung eines Federpaketes zur Erzeugung der notwendigen Spannkraft als nachteilig erwiesen, da das Federpaket vollständig in der Spindel aufgenommen sein muß und somit bei Fehlfunktion des Federpaketes keine Kontrolle mehr bezüglich einer korrekten Spannung möglich ist. Ferner wird durch das Federpaket die Baulänge der Spindel erheblich vergrößert. Schließlich muß zum Entspannen die Kraft des Federpaketes überwunden werden, was eine gesonderte mechanische Betätigungskraft erfordert und naturgemäß nur bei stillstehender Spindel möglich ist.

Ein weiterer Spannantrieb gemäß dem Oberbegriff von Anspruch 1 ist aus der DE-A-38 07 140 bekannt. Hierbei handelt es sich um eine Kupplungsvorrichtung zwischen einem Werkzeugsystemmodul, wie z.B. einer Werkzeug-Grundaufnahme, und einer Werkzeugmaschine, wie z.B. einer Spindel. Zum schnellen Herstellen und Lösen der Verbindung zwischen diesen Komponenten und der Bereitstellung großer Axialkräfte ist eine Spanneinrichtung mit einer Betätigungsstange vorgesehen, über die ein Keilgetriebe angesteuert ist, mit dem in dem einzukoppelnden Teil vorgesehene Spannelemente im wesentlichen radial nach außen in eine entsprechend gestaltete Ausnehmung am anderen zu koppelnden Teil drückbar sind. Die Spannelemente sind von zumindest drei in gleichmäßigen Winkelabständen zueinander angeordneten, klammerartigen Spannklauen gebildet, die im wesentlichen parallel zu einem Zentrierfortsatz der Werkzeug-Grundaufnahme angeordnet und unter Abstützung in einer Zentrieraufnahme der Spindel mit einem im angekuppelten Zustand radial innerhalb des Zentrierfortsatzes liegenden Klauenabschnitt in eine nutartige Ausnehmung des Zentrierfortsatzes schwenkbar sind.

Die bekannte Kupplungsvorrichtung verwendet einen rein mechanischen Spannantrieb mit einem relativ kompliziert aufgebauten Keilgetriebe.

Vor diesem Hintergrund besteht die Aufgabe der Erfindung darin, einen Spannantrieb zum axialen Bewegen und Verspannen einer Zugstange zu schaffen, der druckmittelbetätigt ist und auch bei einem Ausfall der Druckmittelversorgung eine sichere Verriegelung der Zugstange in der Spannstellung gewährleistet. Dabei soll eine möglichst hohe Funktionssicherheit und ein einfacher Aufbau erreicht werden.

Des weiteren soll eine Spindel geschaffen werden, mit der an einem Ende über einen Spanner ein Teil, wie ein Adapter, ein Werkstück oder dgl. gespannt werden kann, das über eine Zugstange mittels eines derartigen Spannantriebes betätigbar ist.

Diese Aufgabe wird hinsichtlich des Spannantriebes gemäß der eingangs genannten Art dadurch gelöst, daß die Verriegelungseinrichtung eine mit dem Spannkolben verbundene, mit radial beweglichen Verriegelungssegmenten versehene Verriegelungszange aufweist, die durch einen axial beweglichen, zentralen druckmittelbetätigten Verriegelungsschieber in die Spannstellung radial nach außen spreizbar sind, daß der Verriegelungsschieber über eine Feder in Richtung auf die Spannstellung vorgespannt ist, und daß die Verriegelungssegmente zwischen Schrägflächen am Spannzylinder und am Verriegelungsschieber in der Spannstellung formschlüssig gegen ein Lösen verriegelt gehalten sind.

Mit einem derartigen Spannantrieb läßt sich eine Zugstange über ein Druckmittel betätigen und in der Spannstellung verspannen, wobei gleichzeitig auch bei Ausfall des Druckmittels eine Aufrechterhaltung der Spannkraft über eine formschlüssige Verriegelung in der Spannstellung gewährleistet ist. Dabei wird gleichzeitig die Gefahr eines Verklemmens dadurch vermieden, daß sich die der Spannung und der Verriegelung dienenden, radial beweglichen Verriegelungssegmente radial nach innen an dem zentralen Verriegelungsschieber abstützen, wodurch die hiervon herrührenden Radialkräfte nach innen auf den Verriegelungsschieber und nicht auf die Wand des Spannzylinders wirken. Auch temperaturbedingte Dehnungen führen so nicht zu einem Verklemmen des Spannantriebes.

Da die Löserichtung des Verriegelungsschiebers entgegengesetzt zur Spannrichtung verläuft, steht die der Zugstange entgegengesetzte Außenfläche des Verriegelungsschiebers für eine Löseeingriff zur Verfügung.

Die Aufgabe der Erfindung wird ferner durch eine Spindel mit einem Ende gelöst, an dem ein Spanner zum Spannen eines Teiles vorgesehen ist, der über eine in der Spindel aufgenommene Zugstange mittels eines Spannantriebes der erfindungsgemäßen Art betätigt wird.

Die Aufgabe der Erfindung wird auf diese Weise vollkommen gelöst, da Aufbau und Funktionsweise des Spannantriebes durch Druckmittelbetätigung stark vereinfacht werden, wobei gleichzeitig eine Funktionskontrolle gewährleistet ist, was bei einer mechanischen Aufbringung der Spannkraft über ein Federpaket nicht möglich ist. Eine Ausfallsicherheit gegen Lösen der Spannung bei Ausfall der Druckmittelversorgung wird dabei erfindungsgemäß durch eine die Zugstange in der Spannstellung formschlüssig sichernde Verriegelungseinrichtung gewährleistet.

Da auf die Verwendung eines umfangreichen Federpaketes zur Aufbringung der Spannkraft verzichtet wird und statt dessen die Zugstange in der Spannstellung formschlüssig gesichert wird, kann die Gesamtlänge der Spindel erheblich verkürzt werden. Dabei ist es grundsätzlich möglich, selbst bei laufender Spindel ein Spannen oder Entspannen der Zugstange zu bewirken.

Eine derartige Ausführung ist insbesondere bei Hochgeschwindigkeits-Frässpindeln (HF-Spindeln) von Bedeutung, da Unwuchtprobleme, die bei herkömmlichen Spindeln, bei denen die Spannkraft über Federpakete aufgebracht wurde, vollständig vermieden werden. Darüber hinaus besteht eine ständige Kontrollmöglichkeit für eine korrekte Spannung durch Überwachung des Spanndruckes. Ferner läßt sich der Spannantrieb in eine erfindungsgemäße Spindel integrieren, wodurch deren Baulänge im Vergleich zu herkömmlichen Spindeln, bei denen zur mechanischen Erzeugung der Spannkraft Federpakete verwendet werden, um etwa 150 Millimeter verkürzt werden kann.

In vorteilhafter Weiterbildung des erfindungsgemäßen Spannantriebes ist die Feder als Druckfeder ausgebildet, die zwischen dem Spannkolben und dem Verriegelungsschieber gehalten ist und den Verriegelungsschieber in eine vom Spannkolben entfernte Richtung vorspannt.

Auf diese Weise ergibt sich eine einfache Einbaumöglichkeit für die Feder.

Da der Verriegelungsschieber über eine Feder abgestützt ist, wird der Verriegelungsschieber auch bei einem Ausfall der Druckmittelversorgung in seiner Verriegelungsstellung gehalten, so daß ein unbeabsichtigtes Lösen des Spannantriebes auch dann ausgeschlossen ist. Das gilt insbesondere auch, wenn die Bewegung des Verriegelungsschiebers über einen mit Druckmittel beaufschlagbaren Lösekolben erfolgt. Die formschlüssige Festlegung des Spannantriebes in der verriegelten Stellung erfolgt ohne hohe radiale Kräfte und ist deshalb auch nicht von Temperatureinflüssen abhängig, durch die die Toleranzen des Spannantriebes verändert werden.

Die bei einem Verriegelungsvorgang ausgeführte radiale Spreizung der Verriegelungssegmente bewirkt durch die Abstützung an der Schrägfläche eine über die Wirkung des Spannkolbens hinausgehende axiale Spannung unter gleichzeitiger formschlüssiger Verriegelung. Über die Kegelstumpffläche wird dabei die axiale Bewegung des Verriegelungsschiebers in eine radiale Spreizbewegung der Verriegelungssegmente umgesetzt. Der Kegelwinkel dieser Kegelstumpffläche kann für eine große Kraftübersetzung hierbei sehr klein gewählt werden, ohne daß dadurch eine Verklemmungsgefahr besteht.

Eine besonders platzsparende Bauweise wird dadurch erreicht, daß vorzugsweise ein mit dem Verriegelungsschieber verbundener Tauchkolben in einen mit dem Spannkolben verbundenen Verriegelungszylinder ragt, der mit der zugstangenseitigen Kolbenseite des Spannkolbens über eine Druckmittelleitung verbunden ist.

Dadurch steht auch die radial innerhalb der Verriegelungssegmente befindliche Fläche des Verriegelungsschiebers zur Beaufschlagung mit den Druckmitteln in Löserichtung zur Verfügung.

Zusätzlich kann die Feder im Verriegelungszylinder angeordnet sein. Vorzugsweise ist der Tauchkolben hohl und stirnseitig offen und nimmt die Feder auf. Dadurch wird kein zusätzlicher Platz für die Anordnung der Feder benötigt, vielmehr wird der vom Tauchkolben umschlossene, ohnehin vorhandene Raum für die Aufnahme der Feder ausgenutzt, die in diesem Fall als Druckfeder ausgebildet ist.

Da für den Verriegelungsvorgang ein verhältnismäßig großer Hub des Verriegelungsschiebers und insbesondere des damit verbundenen Lösekolbens zur Verfügung steht, kann die Überwachung der Verriegelungs- bzw. Lösefunktion besonders einfach und zuverlässig erfolgen. Wird der Verriegelungsschieber durch einen druckmittelbeaufschlagten Lösekolben betätigt, so kann der Volumenstrom des Druckmittels, insbesondere der Hydraulikflüssigkeit, unabhängig vom Einbauort des Spannantriebes zur Überwachung herangezogen werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispieles. Es zeigen:
- Fig. 1: eine Spindel mit einem erfindungsgemäßen Spannantrieb im Längsschnitt in einer Spannstellung in vereinfachter Darstellung;
- Fig. 2: die Spindel gemäß Fig. 1, jedoch in einer Lösestellung;
- Fig. 3: einen Längsschnitt durch den Spannantrieb gemäß Fig. 1 in vereinfachter, leicht abgewandelter Ausführung in vergrößerter Darstellung in der Spannstellung und
- Fig. 4: den Spannantrieb gemäß Fig. 3, jedoch in der Lösestellung.

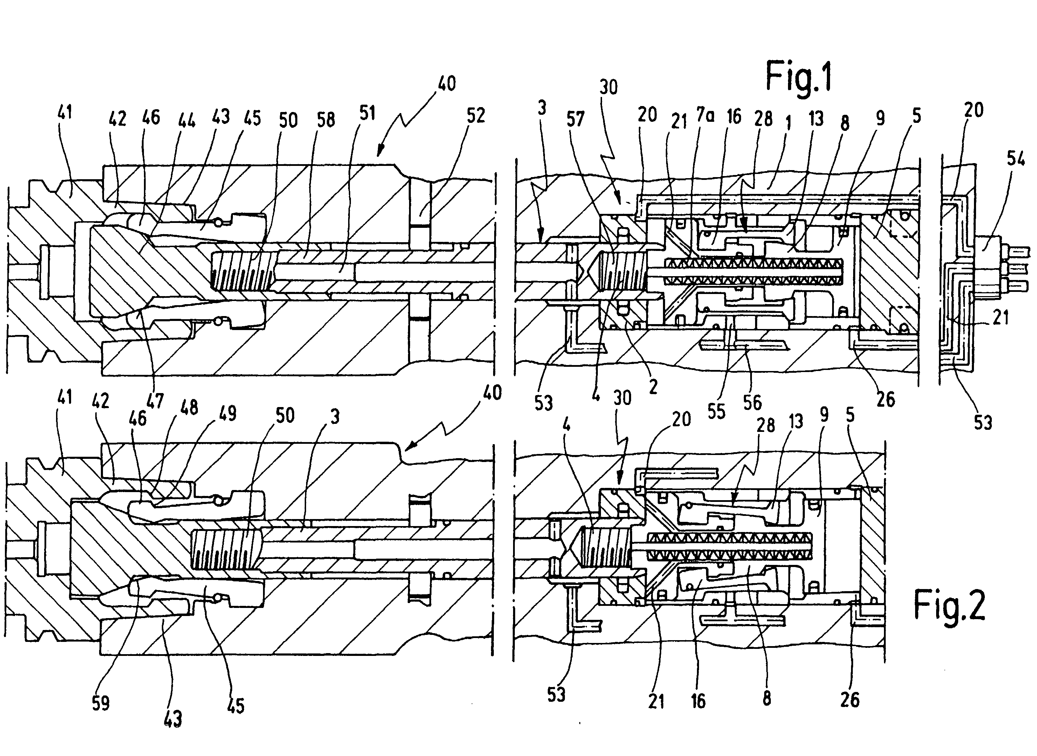

In Fig. 1 ist eine erfindungsgemäße Spindel insgesamt mit der Ziffer 40 bezeichnet. Es handelt sich hierbei um eine HF-Spindel, die mit einer Umdrehungszahl von ca. 20.000 bis 25.000 Umdrehungen pro Minute in nicht dargestellter Weise angetrieben werden kann.

Die HF-Spindel 40 weist an ihrem ersten, äußeren Ende eine Konusaufnahme 43 auf, in der ein Hohlschaftkegel-Adapter (HSK-Adapter) 41 mit hoher Spannkraft gespannt werden kann. Der HSK-Adapter 41 besitzt an seinem äußeren, nicht dargestellten Ende eine Spannzange zur Aufnahme eines Werkzeuges. Der HSK-Adapter 41 kann etwa mit Hilfe eines Werkzeugwechslers gewechselt werden.

Der HSK-Adapter 41 weist einen Konus 42 auf, mit dem der HSK-Adapter 41 mit Hilfe eines Spanners 44 und mehrerer (vorzugsweise drei) Spannzangen 45 in der Konusaufnahme 43 gespannt werden kann.

Zur Betätigung des Spanners 44 dient eine Zugstange 3, die über einen in der rechten Hälfte von Fig. 1 dargestellten Spannantrieb, der insgesamt mit der Ziffer 30 bezeichnet ist, bewegt werden kann.

Die Zugstange 3 ermöglicht eine axiale Verschiebung des Spanners 44 zwischen der in Fig. 1 dargestellten Spannstellung, in der die Zugstange zusätzlich verspannt und gegen ein Lösen formschlüssig verriegelt wird, und der Lösestellung gemäß Fig. 2, in der der HSK-Adapter 41 aus der Konusaufnahme 43 herausgenommen werden kann.

Bei dem Spanner 44 handelt es sich um ein bekanntes Bauteil, das in bekannter Weise mit den Spannzangen 45 zusammenwirkt. Hierbei kann es sich beispielsweise um eine ähnliche Konstruktion handeln, wie aus der DE-A-38 07 140 oder aus der DE-A-38 13 670 bekannt ist.

Der Spanner 44 weist eine konusförmige Spannfläche 47 an seiner Außenseite auf und wirkt mit Spannfingern 46 zusammen, die am adapterseitigen Ende der verschwenkbar aufgenommenen Spannzangen 45 vorgesehen sind. Die Spannfinger 46 weisen jeweils eine Spannfläche 49 auf, die eine Spannfläche 48 an der Innenseite des Konus 42 hintergreift und an der dem Spanner 44 zugewandten Seite eine schräge Spannfläche 59 besitzt, die mit der Spannfläche 47 des Spanners 44 zusammenwirkt.

In der in Fig. 1 gezeigten Spannstellung, in der die Zugstange 3 über den Spannantrieb 30 nach rechts gezogen und gegen ein Lösen verriegelt ist, wird so der HSK-Adapter 41 mittels der Spannfinger 46 der Spannzangen 45 durch Formschluß zwischen den Spannfingern 46 und den Spannflächen 47, 59 und 48, 49 in die Konusaufnahme 43 der Spindel 40 hineingezogen und mit hoher Kraft an der Spindel 40 festgespannt.

Die Zugstange 3 weist einen vorderen Teil 58 auf, der mit einem Gewinde 50 versehen ist und mit dem Spanner 44 verschraubt ist, sowie einen hinteren Teil 57, der als Bolzen mit einem Außengewinde 4 versehen ist und mit dem vorderen Teil 58 verschraubt ist.

Der vordere Teil 58 der Zugspindel 3 ist mittels einer Verdrehsicherung 52 gegen Verdrehen gesichert in einer zentralen Ausnehmung der Zugspindel 40 axial beweglich geführt. Der vordere Teil 58 weist ferner einen zentralen Kühlmittelkanal 51 auf, der über eine Kühlmittelleitung 53 mit Kühlmitteln versorgt werden kann.

Während bei herkömmlichen Spindeln die Zugstange 3 über ein großes Tellerfederpaket mit einer Länge von mindestens etwa 200 Millimetern mit einer hohen Spannkraft beaufschlagt und in der Spannstellung gehalten ist und nur mechanisch gelöst werden kann (vgl. z.B. DE-A-38 07 140), zeichnet sich die erfindungsgemäße Spindel 40 durch einen druckmittelbetätigten Spannantrieb 30 aus, der in der rechten Hälfte der Fig. 1 und 2 dargestellt ist und nachfolgend näher beschrieben ist.

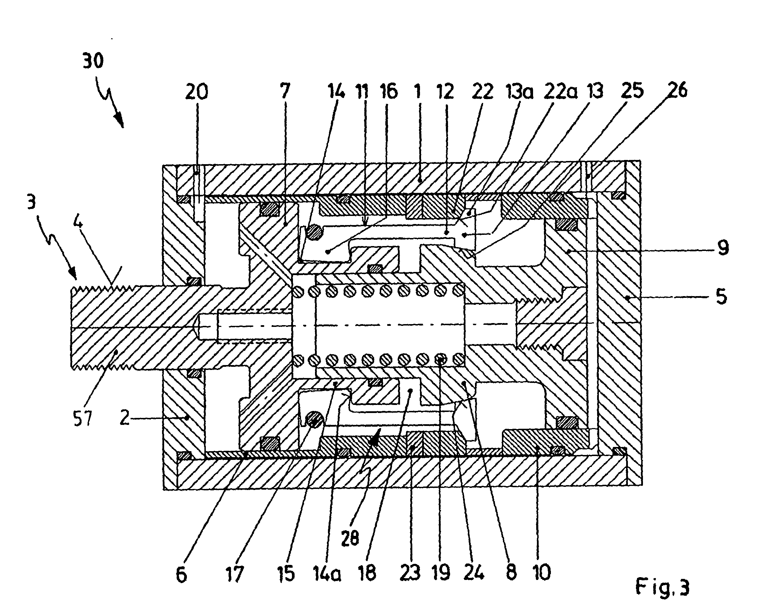

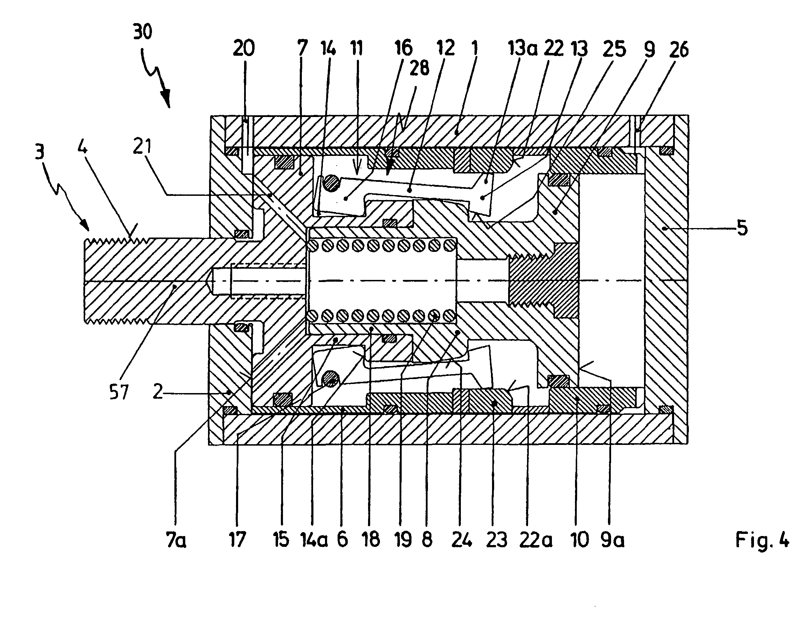

Der Aufbau des Spannantriebes 30 ist aus den vergrößerten Darstellungen gemäß den Fig. 3 und 4 näher ersichtlich.

Dabei ist zum Zwecke der klareren Darstellung der Spannantrieb 30 in den Fig. 3 und 4 leicht vereinfacht dargestellt. Für entsprechende Teile werden entsprechende Bezugsziffern verwendet.

Der Spannantrieb 30 weist einen Spannzylinder 1 auf, der als Hohlraum in der Spindel 40 ausgebildet ist. Aus der einen Stirnwand 2 des Spanzylinders 1 ist der axial bewegliche Bolzen 57 herausgeführt, der den hinteren Teil der Zugstange 3 bildet und mit seinem Außengewinde 4 in den vorderen Teil 58 der Zugstange 3 eingeschraubt ist. An seinem entgegengesetzten Ende ist der Spannzylinder 1 durch einen Zylinderdeckel 5 abgeschlossen.

In einer Zylinderbüchse 6 im Zylinderinnenraum des Spannzylinders 1 ist ein mit dem Bolzen 57 der Zugstange 3 starr verbundener Spannkolben 7 abgedichtet und axial beweglich aufgenommen. Der Spannkolben 7 kann mittels einer insgesamt mit der Ziffer 28 bezeichneten Verriegelungseinrichtung in seiner Spannstellung gemäß Fig. 1 bzw. Fig. 3 formschlüssig gegen ein Lösen gehalten werden.

Ein mit einem Verriegelungsschieber 8 einstückig verbundener Lösekolben 9 ist in einer Zylinderbüchse 10 im Spannzylinder 1 axial beweglich und abgedichtet geführt. Eine Verriegelungszange 11 besteht aus einem Kranz von Segmentarmen 12.

Jeder Segmentarm 12 weist an seinem vom Spannkolben 7 abgekehrten Ende ein Verriegelungssegment 13 auf. Jeder Segmentarm 12 weist an seinem dem Spannkolben zugekehrten Ende einen radial nach innen in einer Umfangsnut 14 eines Verriegelungszylinders 15 ragenden Haltevorsprung 16 auf. Alle Segmentarme 12 sind im Bereich der Haltevorsprünge 16 durch einen äußeren Sprengring 17 zusammengehalten. Der Verriegelungszylinder 15 ist an der der Zugstange 3 abgekehrten Seite mit dem Spannkolben 7 verbunden.

Ein Tauchkolben 18, der mit dem Verriegelungsschieber 8 verbunden ist, ragt in den Verriegelungszylinder 15. Der Tauchkolben 18 ist hohl und stirnseitig zum Spannkolben 7 hin offen. Er nimmt eine Druckfeder 19 auf, die sich einerseits am Verriegelungsschieber 8 und andererseits am Spannkolben 7 abstützt.

Die zugstangenseitige Kolbenseite 7a des Spannkolbens 7 kann über eine Druckmittelleitung 20 im Spannzylinder 1 mit Druckmittel beaufschlagt werden. Als Druckmittel wird bevorzugt Hydrauliköl eingesetzt. Der Innenraum des Verriegelungszylinders 18 ist mit der zugstangenseitigen Kolbenseite 7a des Spannkolbens 7 über Druckmittelleitungen 21 im Spannkolben 7 verbunden. Die dem Spannkolben 7 abgekehrte Rückseite 9a des Lösekolbens 9 ist über eine Druckmittelleitung 26 im Spannzylinder 1 mit Druckmittel beaufschlagbar.

Die Verriegelungssegmente 13 weisen radial nach außen ragende Riegelvorsprünge 13a auf, die in der gespannten Stellung (Fig. 4) hinter eine Verriegelungskante 22 eines Stützrings 23 im Spannzylinder 7 greifen. Der Verriegelungsschieber 8 weist eine äußere Kegelstumpffläche 24 auf, die mit jeweils einer radial inneren Stützfläche 25 jedes Verriegelungssegments 13 in der Spann- und Verriegelungsstellung (Fig. 3) in Eingriff tritt.

Die nach außen ragenden Riegelvorsprünge 13a der Verriegelungssegmente 13 stützen sich in der Spann- und verriegelungsstellung über eine Schrägfläche 22a an der Verriegelungskante 22 des Spannzylinders 7 ab.

Ausgehend von der in Fig. 4 gezeigten Lösestellung erfolgt zur Ausführung eines Spannvorgangs eine Druckmittelbeaufschlagung über die Druckmittelleitung 20. Dadurch bewegt sich der Spannkolben 7 aus der in Fig. 4 gezeigten Stellung nach rechts. Die Zugstange 3 wird in den Spannzylinder 1 hineingezogen. In gleicher Weise werden der Verriegelungsschieber 8 mit seinem Lösekolben 9 und die Verriegelungszange 11 nach rechts bewegt, bis die Riegelvorsprünge 13a der Verriegelungssegmente 13 die Verriegelungskante 22 passiert haben. Durch die weitere Zufuhr von Druckmittel durch die Druckmittelleitung 20 und die Druckmittelleitungen 21 werden der Tauchkolben 18 und damit der Verriegelungsschieber 8 weiter nach rechts bewegt. Die Kegelstumpffläche 24 des Verriegelungsschiebers 8, die beispielsweise mit einem Kegelwinkel von etwa 10° ausgeführt ist, wirkt auf die inneren Stützflächen 25 der Verriegelungssegmente 13 und spreizt die Verriegelungszange 11, so daß sich die Verriegelungssegmente 13 radial nach außen bewegen und mit ihren Riegelvorsprüngen 13a in Eingriff mit der Schrägfläche 22a treten.

Bei der weiteren Axialbewegung des Verriegelungsschiebers 8 in die in Fig. 3 gezeigte Spann- und Verriegelungsstellung bewirkt die Radialbewegung der Riegelvorsprünge 13a an der Schrägfläche 22a die beispielsweise mit einem Steigungswinkel von 30°-60° ausgeführt ist, eine weitere Spannbewegung der Zugstange 3. Hierbei greifen die Haltevorsprünge 16 der Verriegelungszange 11 hinter eine Stützfläche 14a der Umfangsnut 14. Am Ende der Spannbewegung werden die Verriegelungssegmente 13 durch den Verriegelungsschieber 8 formschlüssig in ihrer Verriegelungsstellung gehalten, wobei der Verriegelungsschieber 8 in dieser Stellung allein schon durch die Wirkung der Druckfeder 19 gehalten wird, auch wenn die Beaufschlagung mit Druckmittel unterbrochen wird oder ausfällt.

Zum Lösen des Spannantriebs 30 wird die äußere Kolbenfläche 9a des Lösekolbens 9 mit Druckmittel durch die Druckmittelleitung 26 beaufschlagt. Der Lösekolben 9 schiebt den Verriegelungsschieber 8 bis zum Anschlag gegen den Verriegelungszylinder 15. Dadurch werden die Verriegelungssegmente 13 freigegeben und können sich radial nach innen bewegen. Damit wird die formschlüssige Verriegelung an der Verriegelungskante 22 gelöst und durch die weitere Druckmittelbeaufschlagung des Lösekolbens 9 entgegen der Spannrichtung wird der Spannkolben 7 mit der Zugstange 3 in Löserichtung (nach links) bis in die Lösestellung (Fig. 2 bzw. Fig. 4) bewegt.

Bei einem Ausfall der Druckmittelversorgung oder bei einer anderen Störung kann der Spannantrieb 30 dadurch gelöst werden, daß nach Ausbau des Zylinderdeckels 5 eine axiale Kraft auf den Lösekolben 9 ausgeübt wird, um ihn aus seiner Verriegelungsstellung zu bewegen.

Während in den Fig. 3 und 4 die Feder 19 als Spiralfeder dargestellt ist, ist diese in den Fig. 1 und 2 abgewandelt als Tellerfederpaket dargestellt. Eine Ausgestaltung als Tellerfederpaket bietet den Vorteil, daß sich bei gleicher Baugröße eine etwas höhere Spannung erzeugen läßt.

Des weiteren weist die Stirnwand 2 gemäß den Fig. 3 und 4 eine leicht gegenüber der Stirnwand 2 gemäß den Fig. 1 und 2 abgewandelte Form auf.

Ferner ist in den Fig. 1 und 2 zusätzlich die Druckmittelleitung 20 im Axialverlauf dargestellt, die zum fluidbetätigten Spannen des Spannantriebs 30 vorgesehen ist.

Ferner ist in den Fig. 3 und 4 in Abwandlung zu der Ausführung gemäß den Fig. 1 und 2 die Druckmittelleitung 26, die zum Lösen des Lösekolbens 9 dient, an der Unterseite des Spannzylinders dargestellt.

Schließlich sind in den Fig. 1 und 2 zusätzlich Entlüftungsöffnungen 55, die an eine Entlüftungsleitung 56 angeschlossen sind, dargestellt, die etwa im Bereich zwischen den verriegelungssegmenten 13 und den Haltevorsprüngen 16 der Segmentarme 12 radial durch die Wand des Spannzylinders 1 einmünden.

Die Druckmittelleitungen 20, 21 und die Kühlmittelleitung 53 sind, wie am rechten Ende von Fig. 1 schematisch angedeutet, mit einer Drehdurchführung 54 verbunden, die eine Druckmittel- bzw. Kühlflüssigkeitszufuhr selbst bei hohen Drehzahlen in der Größenordnung von 20.000 bis 25.000 Umdrehung pro Minute ermöglicht.

Hierbei handelt es sich um eine Drehdurchführung 54 bekannter Bauart.

Es versteht sich, daß der in den Fig. 3 und 4 dargestellte Spannantrieb auch zum Spannen von Zugstangen in Kombination mit anderen Bauteilen als der in den Fig. 1 und 2 dargestellten Spindel verwendet werden kann. Beispielsweise kann mittels eines solchen Spannantriebs eine komplette Spindel auswechselbar an einer Mehrspindelmaschine befestigt werden.

## Patentansprüche

1. Spannantrieb zum axialen Bewegen und Verspannen einer Zugstange (3), mit einem Spannzylinder (1), in dem die Zugstange (3) zwischen einer Lösestellung und einer Spannstellung axial beweglich führbar ist, mit einem druckmittelbetätigten Spannkolben (7), der mit der Zugstange (3) verbindbar und gemeinsam mit dieser im Spannzylinder (1) axial beweglich ist, und mit einer die Zugstange (3) in der Spannstellung formschlüssig sichernden Verriegelungseinrichtung (28), **dadurch gekennzeichnet, daß** die Verriegelungseinrichtung (28) eine mit dem Spannkolben (7) verbundene, mit radial beweglichen Verriegelungssegmenten (13) versehene Verriegelungszange (11) aufweist, die durch einen axial beweglichen, zentralen druckmittelbetätigten Verriegelungsschieber (8) in die Spannstellung radial nach außen spreizbar sind, daß der Verriegelungsschieber (8) über eine Feder (19) in Richtung auf die Spannstellung vorgespannt ist, und daß die Verriegelungssegmente (13) zwischen Schrägflächen (22, 24) am Spannzylinder (1) und am verriegelungsschieber (8) in der Spannstellung formschlüssig gegen ein Lösen verriegelt gehalten sind.

2. Spannantrieb nach Anspruch 1, **dadurch gekennzeichnet, daß** die Feder (19) als Druckfeder ausgebildet ist, die zwischen dem Spannkolben (7) und dem Verriegelungsschieber (8) gehalten ist und den Verriegelungsschieber (8) in eine vom Spannkolben (7) entfernte Richtung vorspannt.

3. Spannantrieb nach Anspruch 2, **dadurch gekennzeichnet, daß** der Verriegelungsschieber (8) eine äußere Kegelstumpffläche (24) aufweist, die mit jeweils einer schrägen Stützfläche (25) an der Innenseite eines Verriegelungssegmentes (13) zusammenwirkt.

4. Spannantrieb nach Anspruch 1, 2 oder 3, **dadurch gekennzeichnet, daß** ein mit dem Verriegelungsschieber (8) verbundener Tauchkolben (18) in einen mit einem Spannkolben (7) verbundenen Verriegelungszylinder (15) ragt, der mit der zugstangenseitigen Kolbenseite des Spannkolbens (7) über eine Druckmittelleitung (21) verbunden ist.

5. Spannantrieb nach Anspruch 4, **dadurch gekennzeichnet, daß** der Tauchkolben (18) hohl und stirnseitig offen ausgeführt ist und die Feder (19) aufnimmt.

6. Spannantrieb nach einem der vorhergehenden Ansprüche , **dadurch gekennzeichnet, daß** der Verriegelungsschieber (8) einen Lösekolben (9) aufweist, der im Spannzylinder (1) abgedichtet geführt und in Löserichtung mit Druckmittel beaufschlagbar ist.

7. Spannantrieb nach einem der vorhergehenden Ansprüche, **dadurch gekennzeichnet, daß** die Verriegelungssegmente (13) radial nach außen ragende Riegelvorsprünge (13a) aufweisen, die in der Spannstellung eine Verriegelungskante (22) des Spannzylinders hintergreifen.

8. Spannantrieb nach Anspruch 7, **dadurch gekennzeichnet, daß** sich die Riegelvorsprünge (13a) über eine Schrägfläche (22a) an der Verriegelungskante (22) des Spannzylinders (1) abstützen.

9. Spannantrieb nach einem der vorhergehenden Ansprüche, **dadurch gekennzeichnet, daß** die Verriegelungszange (11) aus einem Kranz von Segmentarmen (12) besteht, daß jeder Segmentarm (12) an seinem vom Spannkolben (7) abgekehrten Ende ein Verriegelungssegment (13) aufweist, und daß jeder Segmentarm (12) an seinem dem Spannkolben (7) zugekehrten Ende einen radial nach innen in eine Umfangsnut (14) des verriegelungszylinders (15) ragenden Haltevorsprung (16) aufweist.

10. Spannantrieb nach Anspruch 9, **dadurch gekennzeichnet, daß** alle Segmentarme (12) durch einen äußeren Sprengring (17) zusammengehalten werden.

11. Spindel mit einem Ende, an dem ein Spanner (44) zum Spannen eines Teiles (41) vorgesehen ist, der über eine in der Spindel (40) aufgenommene Zugstange (3) mittels eines Spannantriebes (30) gemäß einem der vorhergehenden Ansprüche betätigt wird.

## Claims

1. A clamping drive for axially moving and clamping a tie rod (3), comprising a clamping cylinder (1), wherein the tie rod (3) can be guided axially movable between a release position and a clamping position, a pressure media activated clamping piston (7) which can be connected with the tie rod (3) and can be axially moved commonly therewith within the clamping cylinder (1), further comprising a latching device (28) positively securing the tie rod (3) in the clamping position, **characterized in that** the latching device (28) comprises latching tongs (11) connected with the clamping piston (7) and being provided with radially movable latching segments (13) which can be expanded to the outside into the clamping position by means of an axially movable pressure media activated latching slider (8), that the latching slider (8) is biased into the direction of the clamping position by means of a spring (19), and **in that** the latching segments (13) are held in the clamping position positively latched against release between inclined surfaces (22, 24) at the clamping cylinder (1) and at the latching slider (8).

2. The clamping drive of claim 1, **characterized in that** the spring (19) is configured as a pressure spring which is held between the clamping piston (7) and the latching slider (8) and biases the latching slider (8) into a direction remote from the clamping piston (7).

3. The clamping drive of claim 2, **characterized in that** the latching slider (8) comprises an outer frustum cone surface (24) which cooperates, respectively, with a slanted support surface (25) at the inner side of a latching segment (13).

4. The clamping drive of claim 1, 2 or 3, **characterized in that** a dipping piston (18) being connected with the latching slider (8) protrudes into a latching cylinder (15) being connected with one clamping cylinder (7) and being connected with the piston side of the clamping piston (7) facing the tie rod via a pressure media line (21).

5. The clamping drive of claim 4, **characterized in that** the dipping cylinder (18) is configured hollow and open to a front surface and receives a spring (19).

6. The clamping drive of any of the preceding claims, **characterized in that** the latching slider (8) comprises a release piston (9) which is configured sealed within the clamping cylinder (1) and can be subjected to pressure medium in the release direction.

7. The clamping drive of any of the preceding claims, **characterized in that** the latching segments (13) comprise locking protrusions (13a) protruding to the outside and engaging in the clamping position a latching edge (22) of the clamping cylinder.

8. The clamping drive of claim 7, **characterized in that** the locking protrusions (13a) are supported by means of a slanted surface (22a) against the latching edge (22) of the clamping cylinder (1).

9. The clamping drive of any of the preceding claims, **characterized in that** the latching tongs (11) are configured of a belt of segment arms (12), **in that** each segment arm (12) at its end remote from the clamping piston (7) comprises a latching segment (13), and **in that** each segment arm (12) at its end facing the clamping piston (7) comprises a holding protrusion (16) protruding radially inwardly into a circumferential groove (14) of the latching cylinder (15).

10. The clamping drive of claim 9, **characterized in that** all segment arms (12) are held together by an outer retaining ring (17).

11. A spindle comprising an end whereon a tensioner (44) for clamping a part (41) is provided that is activated by means of a tie rod (3) provided within the spindle (40) using a clamping drive (30) according to any of the preceding claims.

## Revendications

1. Commande de serrage pour déplacer et serrer axialement une barre de traction (3), avec un cylindre de serrage (1) dans lequel la barre de traction (3) peut être guidée de manière mobile axialement entre une position de libération et une position de serrage, avec un piston de serrage (7) actionné par un fluide sous pression, qui peut être relié à la barre de traction (3) et est mobile axialement avec celle-ci dans le cylindre de serrage (1), et avec un dispositif de verrouillage (28) immobilisant la barre de traction (3) dans la position de serrage par engagement positif, **caractérisée en ce que** le dispositif de verrouillage (28) présente une pince de verrouillage (11) reliée au piston de serrage (7) et munie de segments de verrouillage (13) mobiles radialement, pince qui peut être écartée radialement vers l'extérieur dans la position de serrage par un coulisseau de verrouillage central (8) mobile axialement et actionné par le fluide sous pression, **en ce que** le coulisseau de verrouillage (8) est précontraint par un ressort (19) en direction de la position de serrage, et **en ce que** les segments de verrouillage (13) sont tenus verrouillés contre une libération dans la position de verrouillage par engagement positif entre des surfaces inclinées (22, 24) prévues sur le cylindre de serrage (1) et sur le coulisseau de verrouillage (8) .

2. Commande de serrage selon la revendication 1, **caractérisée en ce que** le ressort (19) est conformé en ressort de compression, qui est tenu entre le piston de serrage (7) et le coulisseau de verrouillage (8) et qui, précontraint le coulisseau de verrouillage (8) dans une direction éloignée du piston de serrage (7).

3. Commande de serrage selon la revendication 2, **caractérisée en ce que** le coulisseau de verrouillage (8) présente une surface extérieure tronconique (24) qui coopère avec à chaque fois une surface d'appui inclinée (25) située sur la face intérieure d'un segment de verrouillage (13).

4. Commande de serrage selon la revendication 1, 2 ou 3, **caractérisée en ce qu'**un piston plongeur (18) relié au coulisseau de verrouillage (8) forme saillie dans un cylindre de verrouillage (15) relié au piston de serrage (7), cylindre qui est relié au côté du piston de serrage (7) tourné vers la barre de traction par l'intermédiaire d'une conduite de fluide sous pression (21).

5. Commande de serrage selon la revendication 4, **caractérisée en ce que** le piston plongeur (18) est réalisé ouvert du côté frontal et creux et reçoit le ressort (19).

6. Commande de serrage selon l'une des revendications précédentes, **caractérisée en ce que** le coulisseau de verrouillage (8) présente un piston de libération (9) qui est guidé de façon hermétique dans le cylindre de serrage (1) et peut être exposé au fluide sous pression dans la direction de libération.

7. Commande de serrage selon l'une des revendications précédentes, **caractérisée en ce que** les segments de verrouillage (13) présentent des saillies de verrouillage (13a) formant saillie radialement vers l'extérieur qui, dans la position de serrage, saisissent par l'arrière un bord de verrouillage (22) du cylindre de serrage.

8. Commande de serrage selon la revendication 7, **caractérisée en ce que** les saillies de verrouillage (13a) s'appuient par l'intermédiaire d'une surface inclinée (22a) contre le bord de verrouillage (22) du cylindre de serrage (1).

9. Commande de serrage selon l'une des revendications précédentes, **caractérisée en ce que** la pince de verrouillage (11 ) est composée d'une couronne de bras à segment (12), **en ce que** chaque bras à segment (12) présente un segment de verrouillage (13) à son extrémité opposée au piston de serrage (7), et **en ce que** chaque bras à segment (12) présente une saillie d'arrêt (16) formant saillie radialement vers l'intérieur dans une rainure périphérique (14) du cylindre de verrouillage (15).

10. Commande de serrage selon la revendication 9, **caractérisée en ce que** tous les bras à segment (12) sont tenus ensemble par un jonc extérieur (17).

11. Broche avec une extrémité sur laquelle est prévu un organe de serrage (44) destiné à serrer une pièce (41), qui est actionné par l'intermédiaire d'une barre de traction (3) logée dans la broche (40) au moyen d'une commande de serrage selon l'une des revendications précédentes.
